# EUROPÄISCHE PATENTANMELDUNG

(11) **EP 0 663 513 A1**
(43) Veröffentlichungstag der Anmeldung: **19.07.1995**
(21) Anmeldenummer: 95100563.6
(22) Anmeldetag: 17.01.1995
(51) Int. Cl.: F01B 3/00

(54) **Taumelscheiben-Maschine, insbesondere Brennkraftmaschine**

(30) Priorität: 18.01.1994 DE 4401327
(71) Anmelder: Achammer, Alfred, Dipl.-Ing., A-6020 Innsbruck (AT)
(72) Erfinder: Achammer, Alfred, Dipl.-Ing., A-6020 Innsbruck (AT)
(74) Vertreter: Zmyj, Erwin, Dipl.-Ing., Dipl.-Wirtsch.-Ing.

(57) **Zusammenfassung**

Bei der Taumelscheiben-Maschine, die in einem Gehäuse (1) eine zentrale Maschinenwelle (3) mit schrägem Kubelzapfen (4) aufweist, sind um die Maschinenwelle (3) mehrere Zylinder (9) angeordnet, deren Kolben (10) über Pleuelstangen (12) auf einer Taumelscheibe (5) gelenkig abgestützt sind, die auf dem Kurbelwellenzapfen (4) gelagert ist. Die Taumelscheibe (5) weist an ihrem Umfang einen Abstützring (7) auf, der durch den Arbeitsdruck der Kolben (10) gegen einen Gegenring (8) gedrückt wird, welcher gehäusefest angeordnet ist. Abstützring (7) und Gegenring (8) bilden das Reaktionsglied. Zur Positionierung der Taumelscheibe (5) ist eine Positioniereinrichtung (17) und bei einer Variante eine Positioniereinrichtung (28) vorgesehen, die sicherstellt, daß die Taumelscheibe (5) ihre vorgeschriebene Lage in bezug auf die Zylinderanordnung aufgrund unterschiedlich großer Momente in Umfangsrichtung gesehen, nur gering verläßt und wieder in ihre Sollposition zurückgebracht wird.

## Beschreibung

Die Erfindung bezieht sich auf eine Taumelscheiben-Maschine, insbesondere Brennkraftmaschine mit mehreren in einem gemeinsamen Gehäuse um eine Maschinenwelle herum angeordneten Zylindern, von denen jeder mindestens einen Kolben enthält, dessen Pleuelstange an einer Taumelscheibe angelenkt ist, die über ein mit der Taumelscheibe fest verbundenes Reaktionsglied am Gehäuse abgestützt und mittels Lager auf einem schrägen Kurbelzapfen der zentralen Maschinenwelle gelagert ist und die Pleuelstange in Umfangsrichtung der Taumelscheibe schräg an dieser angreift.

Eine Taumelscheiben-Maschine dieser Art ist beispielsweise aus der US-PS 2,569,559 bekannt. Um das auf die Taumelscheibe wirkende Drehmoment gegenüber dem Gehäuse abzustützen und die Taumelscheibe in bezug auf die Zylinderanordnung zu positionieren, damit keine Verdrehung der Taumelscheibe gegenüber den Zylindern eintritt, ist ein Reaktionsglied vorgesehen, das miteinander in Eingriff stehende Zahnräder aufweist, von denen das eine an der Taumelscheibe und das andere am Gehäuse befestigt ist. Bei dieser Art der Momentenabstützung ist es vorteilhaft, die Schrägstellung der Pleuelstange so zu wählen, daß die sich auf der Taumelscheibe bildenden maximalen und minimalen Rückdrehmomente stets positiv sind, wodurch die Zähne der Zahnräder immer in der gleichen Richtung vom Drehmoment belastet sind, da wechselweise auftretende Drehmomente zu einer hohen Belastung der Zahnräder und zu einer starken Geräuschentwicklung führen. Da dieses aus zwei Zahnräder bestehende Reaktionsglied nur das Drehmoment nicht aber die Axialbelastung der Taumelscheibe aufnehmen kann, sind besonderes hochwertige Axiallager auf dem schrägen Kurbelzapfen der Maschinenwelle zur Abstützung der Taumelscheibe notwendig, was den konstruktiven Aufwand und das Gewicht erhöht, welches insbesondere bei der Taumelscheibe aufgrund der auftretenden hohen Massenkräfte möglichst geringgehalten werden sollte. Dieser Nachteil wird bei einer weiteren bekannten Taumelscheiben-Maschine (DE-AS 10 49 187) durch die Anordnung von Stützflächen radial innerhalb der Verzahnungen behoben, da diese Abstützflächen die Axialkräfte aufnehmen, während die Verzahnungen für die Übertragung der Drehmomente vorgesehen sind.

Aufgabe der Erfindung ist es, eine Taumelscheiben-Maschine der eingangs genannten Art so auszugestalten, daß die auftretenden Axialkräfte unter Vermeidung der aufwendigen Axiallager und die auf die Taumelscheibe wirkenden Drehmomente weitgehend verschleißfrei aufgenommen werden können.

Diese Aufgabe wird durch die im Anspruch 1 angegebenen Maßnahmen gelöst.

Durch die Schrägstellung der Pleuelstangen, was durch Verdrehen der Taumelscheibe gegenüber der Zylinderanordnung erreicht wird, kann der Drehmomentenverlauf beeinflußt werden. Nach der vorliegenden Erfindung soll die Schrägstellung der Pleuelstange so gewählt werden, daß die sich auf der Taumelscheibe bildenden positiven und negativen Rückdrehmomente dem Betrage nach im wesentlichen gleich groß sind, wodurch sowohl in Drehrichtung als auch gegen die Drehrichtung der Taumelscheibe auf das Reaktionsglied dem Betrage nach die geringsten Drehmomente einwirken, die sich in der Summe gegenseitig aufheben, d.h. das Reaktionsglied hat während eines gewissen Drehwinkels zunächst ein positives Drehmoment in der einen Drehrichtung und anschließend ein negatives Drehmoment in der anderen Drehrichtung aufzunehmen. Würde man die Pleuelstangen gegenüber der Taumelscheibe nicht schrägstellen, so würde das Drehmoment nur in einer Drehrichtung wirken und einen Betrag aufweisen, der der Summe der absoluten Beträge der positiven und negativen Drehmomente bei der Schrägstellung der Pleuelstange entspricht. Das Reaktionsglied ist in diesem Falle zwar nur in einer Richtung belastet, jedoch ist das abzustützende Drehmoment wesentlich höher.

Da durch die Wahl der Schrägstellung der Pleuelstange in dem Sinne, daß sich die positiven und negativen Drehmomente gegenseitig aufheben und das in der jeweiligen Drehrichtung durch das Reaktionsglied abzustützende Drehmoment verhältnismäßig gering ist, ist es möglich das Reaktionsglied in Form eines kegelförmigen Abstützringes an der Taumelscheibe und in Form eines am Gehäuse befestigten ebenfalls kegelförmig ausgebildeten Kegelringes auszubilden, die die Drehmomente durch Reibschluß aufnehmen. Hierdurch wird das bisher übliche Reaktionsglied in Form von zwei ineinandergreifenden Zahnkränzen mit den dabei auftretenden Verschleißerscheinungen und der damit verbundenen Geräuschentwicklung vermieden. Die Abstützung der Drehmomente mittels des erfindungsgemäß ausgebildeten Reaktionsgliedes ist aufgrund des hohen Axialdruckes möglich, der den Abstützring gegen den Gegenring drückt, wodurch ein ausreichender Reibschluß entsteht. Da der Abstützring und der Gegenring im Durchmesser gleichen Umfang aufweisen, tritt keine durchmesserbedingte Relativbewegung zwischen diesen beiden Ringen auf. Da in der Praxis nicht sichergestellt werden kann, daß sich die positiven und negativen Drehmomente in allen Betriebszuständen der Maschine gegenseitig aufheben, und da auch ein gewisser, wenn auch geringfügiger Schlupf beim Reaktionsglied nicht vermeidbar ist, besteht die Tendenz, daß die Taumelscheibe in der einen oder der anderen Drehrichtung sich gegenüber der Zylinderanordnung verdreht. Um dies zu vermeiden, ist nach der Erfindung eine Positioniereinrichtung vorgesehen, welche die Taumelscheibe in der vorgegebenen Lage hält, damit sich der Winkel der Pleuelstangen gegenüber der Taumelscheibe nicht verändert.

Eine erste Möglichkeit der Ausgestaltung der Positioniereinrichtung besteht darin, daß diese als Magnetkupplung ausgebildet ist. Bei solchen an sich bekannten Magnetkupplungen verwendeten Magnete können durch Spezialverfahren so stark magnetisiert werden, daß sie sehr hohe an der Magnetkupplung auftretende Drehmomente aufnehmen können.

Um auch in extrem ungünstigen Fällen ein Verdrehen der Taumelscheibe gegenüber der Zylinderanordnung zu vermeiden, ist in weiterer Ausgestaltung der Erfindung zusätzlich zu der als Magnetkupplung ausgebildeten Positioniereinrichtung eine Sicherungseinrichtung für die Taumelscheibe vorgesehen, die zwei im wesentlichen spielfrei ineiandergreifende Zahnkränze umfaßt, von denen ein Zahnkranz an der Taumelscheibe, der andere Zahnkranz am Gehäuse angeordnet ist, wobei zumindest ein Zahnkranz mit begrenztem Spiel in Drehrichtung gehalten ist. Die bei der Positionierung der Taumelscheibe von der Positioniereinrichtung aufzunehmenden Drehmomente werden in erster Linie von der Magnetkupplung in bekannter Weise berührungslos aufgenommen. Die Zahnräder der Sicherungseinrichtung sind zwar ständig in Eingriff, unterliegen aber aufgrund des Spieles in Drehrichtung erst dann einer gewissen Belastung, wenn die Magnetkupplung in ungünstigen Fällen die auftretenden Drehmomente nicht mehr vollständig aufnehmen kann.

Eine weitere Möglichkeit der Ausgestaltung einer Positioniereinrichtung besteht darin, daß die Positioniereinrichtung zwei Zahnkränze umfaßt, von denen der eine an der Taumelscheibe und der andere am Gehäuse angeordnet ist, daß die beiden Zahnkränze im Berührungsbereich von Abstützring und Gegenring im wesentlichen spielfrei ineinander eingreifen, und daß zumindest ein Zahnkranz in Umfangsrichtung elastisch gehalten ist. Bei dieser Ausgestaltung kommen zwar auch zwei ineinandergreifende Zahnkränze zur Anwendung, wie dies bei dem bisher bekannten Reaktionsgliedern der Fall ist, jedoch sind diese Zahnkränze von dem allergrößten Teil der Umfangskräfte durch Abstützring und Gegenring entlastet und brauchen deshalb nur die Positionierungskräfte nicht aber das Hauptdrehmoment aufzunehmen. Der entscheidende Vorteil gegenüber den bekannten Reaktionsgliedern, die sowohl das Hauptdrehmoment der Maschine als auch die Positionierung übernehmen mußten, besteht darin, daß zumindest einer der beiden Zahnkränze in Drehrichtung elastisch gehalten ist, wodurch höhere Belastungswerte elastisch aufgenommen und in elastischer Weise abgebaut werden können, so daß eine übermäßige Beanspruchung der Zahnkränze, die nur zur Positionierung der Taumelscheibe dienen, nicht auftreten. Vorzugsweise ist die elastische Verdrehbarkeit der beiden Zahnkränze auf einen Winkelbetrag beschränkt, der geringer als 1° ist.

In vorteilhafter Weise können zur drehelastischen Halterung eines der Zahnkränze eine Vielzahl von gleichmäßig verteilter elastischer Stehbolzen dienen, die zwischen Zahnkranz und Gehäuse bzw. Taumelscheibe angeordnet sind. Vorzugsweise ist aus Gründen der räumlichen Anordnung diese Halterung zwischen Zahnkranz und Gehäuse vorgesehen.

Damit das Reaktionsglied möglichst hohe Drehmomentwerte über eine lange Zeit aufnehmen kann, ist es vorteilhaft, wenn die Berührungsflächen von Abstützring und Gegenring eine Oberflächenschicht mit einem gegenüber Stahlflächen wesentlich erhöhtem Reibwert aufweisen. Solche Oberflächenschichten sind bekannt und können durch ein Beschichtungsverfahren, z.B. Spray-Coating-Verfahren, Plasma-Spray-Beschichtungsverfahren, D-Gun-Verfahren oder durch Borieren erzeugt sein.

Da das Reaktionsglied innerhalb des Maschinengehäuses sich befindet, ist es einem ständigen Ölnebel ausgesetzt, wodurch sich auf den Berührungsflächen von Abstützring und Gegenring ein Ölfilm bildet, welcher den Reibschluß zwischen diesen beiden Teilen vermindern könnte. Um diesen Ölfilm besser verdrängen zu können, ist in vorteilhafter Weise vorgesehen, daß zumindest eine der Berührungsflächen von Abstützring und Gegenring mit Drainagerillen zur Ableitung von auf den Berührungsflächen befindlichem Öl aufweist.

Eine bevorzugte Ausgestaltung der Erfindung sieht vor, daß der Abstützring im Bereich des äußeren Umfangs der Taumelscheibe angeordnet ist, wodurch die aus den positiven und negativen Drehmomenten herrührenden in der Berührungsebene der beiden Ringe wirkenden Kräfte gering gehalten werden. Aus dem gleichen Grunde ist es vorteilhaft, wenn der mit der Taumelscheibe verbundene Teil der Positionierungseinrichtung am äußeren Umfang der Taumelscheibe angeordnet ist.

Die Erfindung wird nachstehend anhand eines in der Zeichnung dargestellten Ausführungsbeispieles näher erläutert. In der Zeichnung zeigen:
- **Figur 1:**: einen Schnitt durch eine Taumelscheiben-Brennkraftmaschine in Gegenkolbenausbildung mit gemeinsamen Brennräumen;
- **Figur 2:**: eine Draufsicht auf eine Zylinderanordnung;
- **Figur 3:**: eine Teilansicht in Richtung des Pfeiles III in Figur 1;
- **Figur 4:**: eine Teilansicht in Richtung des Pfeiles IV in Figur 1;
- **Figur 5:**: eine Teilansicht in Richtung des Pfeiles V in Figur 1; und
- **Figur 6:**: eine Teilansicht in Richtung des Pfeiles VI in Figur 1.

Bei dem nachfolgend beschriebenen Ausführungsbeispiel, bei welchem nur auf die erfindungswesentlichen Teile näher eingegangen wird, handelt es sich um eine luftverdichtende, selbstzündende nach dem Zweitaktprinzip arbeitende Taumelscheiben-Brennkraftmaschine in Gegenkolbenausführung, bei welcher aus Steuerzeitgründen die Taumelscheibe der Auslaßkolben (Auslaßtaumelscheibe 5a) der Taumelscheibe der Einlaßkolben (Einlaßtaumelscheibe 5b) um etwa 15° voreilt. Aus diesem Grunde fallen an der Auslaßtaumelscheibe etwa 2/3 und an der Einlaßtaumelscheibe 1/3 des zu übertragenden Drehmomentes an.

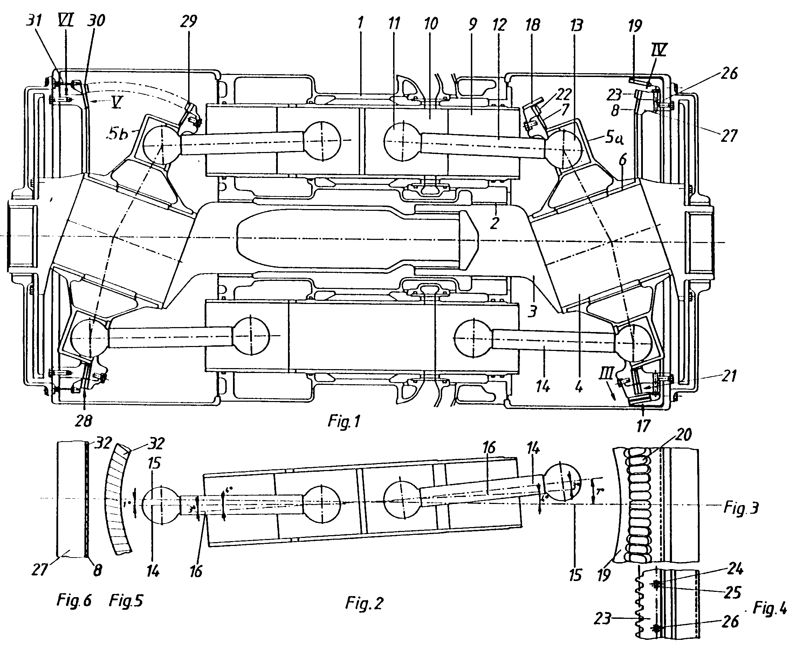

Wie aus Figur 1 ersichtlich weist eine Taumelscheiben-Maschine ein Gehäuse 1 auf, in dem mittels Radiallagern 2 eine Maschinenwelle 3 drehbar gelagert ist, die schräge Kurbelzapfen 4 aufweist. Auf jedem Kurbelzapfen 4 ist eine Taumelscheibe 5 mittels Radiallagern 6 gelagert. In der Nähe des äußeren Umfanges weist die Taumelscheibe 5 einen Abstützring 7 auf, der sich an einem gehäusefesten Gegenring 8 abstützt und somit sämtliche Axialkräfte, die auf den Kurbelzapfen wirken würden, auf diesen Gegenring überträgt. Somit ist es möglich, daß die Taumelscheibe 5 nur mittels Radiallager 6 ohne Axiallager gelagert ist.

Um die Maschinenwelle 3 herum sind mehrere Zylinder 9 angeordnet, in denen Kolben 10 gegeneinander verschiebbar sind und somit eine Gegenkolbenmaschine bilden, die nach dem Zweitaktprinzip arbeitet. Dieser Teil ist jedoch nicht Gegenstand der Erfindung, weshalb auf eine nähere Beschreibung verzichtet wird. Die Kolben 10 sind über ein Kugelgelenk 11 mit einer Pleuelstange 12 verbunden, die ihrerseits mittels eines weiteren Kugelgelenkes 13 an der Taumelscheibe 5 gelagert ist.

Die sich aus der Arbeit der Kolben 10 ergebenden Kräfte werden auf die Taumelscheibe 5 über die Pleuelstangen 12 übertragen, woraus sich einerseits Axialkräfte und aufgrund der Lagerung der Taumelscheibe 5 auf dem schrägen Kurbelzapfen 4 Umfangskräfte ergeben, aus denen sich das Maschinendrehmoment ergibt. Voraussetzung hierfür ist, daß die Taumelscheibe 5 gegenüber dem Gehäuse abgestützt wird, damit das Drehmoment an der Maschinenwelle 3 abgenommen werden kann. Zur Abstützung der Taumelscheibe hinsichtlich des Drehmomentes und zur Aufnahme der Axialkräfte ist der Abstützring 7 an der Taumelscheibe und der Gegenring 8 an dem Maschinengehäuse 1 vorgesehen, die ausschließlich durch Reibschluß miteinander in Verbindung stehen, was aufgrund der hohen Anpreßkräffe und einem hohen Reibwert möglich ist, den die Berührungsflächen des Abstützringes 7 und des Gegenringes 8 aufweisen. Die Abstützung des Drehmomentes gegenüber dem Gehäuse 1 wird auch noch dadurch begünstigt, daß der Abstützring möglichst nahe am Außenumfang der Taumelscheibe angeordnet ist, wodurch die aufzunehmenden Kräfte wesentlich geringer sind, als wenn dieser Abstützring näher an der Achse des Kurbelzapfens 4 sitzen würde.

Damit die zu übertragenden bzw. abzustützenden Drehmomente möglichst geringe Umfangskräfte an dem Abstützring 7 und dem Gegenring 8 erzeugen, ist bei dem vorliegenden Ausführungsbeispiel, bei welchem wie oben bereits erwähnt, die Taumelscheibe der Auslaßkolben, d.h. die Auslaßtaumescheibe 5a der Taumelscheibe der Einlaßkolben, d.h. der Einlaßtaumelscheibe 5b um etwa 15° voreilt, eine Schrägstellung der Pleuelstangenachse 14 gegenüber der Senkrechten auf die Taumelscheibe, die mit der Maschinenwellenachse 15 zusammenfällt um 7° an der Auslaßseite und um -1° an der Einlaßseite vorgesehen. Bei dieser Auslegung sind die auf der jeweiligen Taumelscheibe auftretenden maximalen und minimalen Rückdrehmomente dem Betrage nach im wesentlichen gleich groß, so daß sie sich gegenseitig aufheben und weisen auch die kleinstmöglichen absoluten Werte auf, so daß die am Abstützring und am Gegenring aufzunehmenden Umfangskräfte, die sich nach einem sinusförmigen Verlauf ändern, die kleinstmöglichen absoluten Werte annehmen. Damit sind günstige Voraussetzungen dafür geschaffen worden, daß die Abstützung der an den Taumelscheiben auftretenden Drehmomente gegenüber dem Gehäuse durch Reibschluß erfolgen kann. Die Schrägstellung der Pleuelstangen ist aus Figur 2 ersichtlich. Damit die Auslenkung der Pleuelstange gegenüber der mit 16 bezeichneten Zylinderachse nicht zu groß ausfällt, ist die Zylinderachse gegenüber der Maschinenwellenachse um 4° verschränkt, wodurch sich für jede Kolbenstange auf beiden Seiten ein Auslenkwinkel von 3° gegenüber der Zylinderachse ergibt.

Trotz der Schrägstellung der Pleuelstangen gegenüber den Taumelscheiben in dem Sinne, daß sich das auf den Taumelscheiben bildende Rückdrehmoment aufhebt und einen möglichst geringen Wert annimmt, ist es erforderlich, die Taumelscheiben an einem Auswandern aus ihren vorgesehenen Lagen zu hindern, weshalb Positioniereinrichtungen vorgesehen sind. Im dargestellten Ausführungsbeispiel sind zwei Möglichkeiten der Ausbildung einer Positioniereinrichtung dargestellt, wobei die eine Ausführung der rechten Maschinenhälfte und die zweite Ausgestaltungsmöglichkeit der linken Maschinenhälfte zugeordnet ist.

Die Positioniereinrichtung, die der rechten Maschinenhälfte zugeordnet ist, ist ingesamt mit 17 bezeichnet und umfaßt zwei ringförmige Teile 18, 19 einer bekannten Magnetkupplung, wobei Teil 18 am Außenumfang der Taumelscheibe 5 und Teil 19 am Gehäuse befestigt ist. Ein Ausschnitt eines solchen Teiles einer Magnetkupplung ist in Figur 3 dargestellt und umfaßt eng nebeneinander angeordnete Permanentmagnete 20. Für den Fall, daß bei besonders ungünstigen Betriebszuständen die Magnetkupplung die Positionierung der Taumelscheibe nicht gewährleisten sollte, ist eine insgesamt mit 21 bezeichnete Sicherungseinrichtung vorgesehen, die zwei im wesentlichen spielfrei ineinandergreifende Zahnkränze 22 und 23 aufweist, von denen der eine Zahnkranz 22 der Taumelscheibe 5 und der andere Zahnkranz 23 dem Gehäuse 1 zugeordnet ist. Um zu gewährleisten, daß die beiden Zahnkränze 22 und 23 im Dauerbetrieb keine Kräfte übertragen, die von der Magnetkupplung 17 aufzunehmen sind, ist der Zahnkranz 23 mit Spiel 24 gegenüber dem Gehäuse 1 gehalten, welches dadurch sich ergibt, daß in dem Zahnkranz 23 Langlöcher 25 vorgesehen sind, durch welche Befestigungsbolzen 26 hindurchgreifen, die in ein gehäusefestes Teil 27 eingeschraubt sind, welches auch den Gegenring 8 trägt. Der Zahnkranz 23 kann sich somit um das Spiel 24 gegenüber dem Gehäuse verdrehen und nimmt erst dann Kräfte auf, wenn die Magnetkupplung 17 ein Auswandern der Taumelscheibe gegenüber dem Gehäuse um einen Betrag zuläßt, welcher dem Spiel 24 entspricht.

In der linken Hälfte der Figur 1 ist eine weitere Positioniereinrichtung dargestellt, die insgesamt mit 28 bezeichnet ist und die sowohl die Positionierung als auch die Sicherung gegen Verdrehen übernimmt. Diese Positioniereinrichtung umfaßt zwei Zahnkränze 29 und 30, von denen der eine 29 an der Taumelscheibe 5 und der andere 30 am Gehäuse 1 angeordnet ist. Die beiden Zahnkränze stehen im Berührungsbereich von Abstützring 7 und Gegenring 8 im wesentlichen spielfrei im Eingriff. Damit die auf diese Zahnkränze 29, 30 in Umfangsrichtung wirkenden Kräfte möglichst klein sind, ist der Zahnkranz 29 am äußeren Umfang der Taumelscheibe 5, also noch außerhalb des Abstützringes 7 angeordnet. Der Zahnkranz 30 ist mittels vieler auf den Umfang verteilter elastischer Bolzen 31, die einerseits am Gehäuse 1 und andererseits am Zahnkranz 30 befestigt sind, drehelastisch gehalten, wobei die Ausbildung dieser Bolzen 31 so gewählt ist, daß der Auslenkwinkel 1° nicht übersteigt. Hierdurch werden besonders hohe Belastungen der Zähne vermieden. Die Hauptkräfte werden ohnehin von dem Abstützring 7 und dem Gegenring 8 aufgenommen und die Zahnkränze 29 und 30 sichern nur die Positionierung der Taumelscheibe in der vorgegebenen Stellung.

Die Figuren 5 und 6 zeigen einen Teilausschnitt der Oberfläche des Gegenringes 8 und dessen Seitenansicht, wobei das Besondere darin besteht, daß diese Oberfläche mit Drainagerillen 32 versehen ist, die schräg zur radialen Richtung angeordnet sind. Diese Drainagerillen sollen das zwischen Abstützring 7 und Gegenring 8 eindringende Öl ableiten, um den Reibschluß, der aufgrund eines besonderen Beschichtungsverfahrens sehr hoch ausgebildet ist, nicht zu beeinträchtigen.

## Patentansprüche

1. Taumelscheiben-Maschine, insbesondere Brennkraftmaschine mit mehreren in einem gemeinsamen Gehäuse um eine Maschinenwelle herum angeordneten Zylindern, von denen jeder mindestens einen Kolben enthält, dessen Pleuelstange an einer Taumelscheibe angelenkt ist, die über ein mit der Taumelscheibe fest verbundenes Reaktionsglied am Gehäuse abgestützt und mittels Lager auf einem schrägen Kurbelzapfen der zentralen Maschinenwelle gelagert ist und die Pleuelstange in Umfangsrichtung der Taumelscheibe schräg an dieser angreift, **dadurch gekennzeichnet**, daß die Schrägstellung der Pleuelstange (12) gegenüber der Taumelscheibe (5) so gewählt ist, daß die sich auf der Taumelscheibe (5) bildenden positiven und negativen Rückdrehmomente dem Betrage nach im wesentlichen gleich groß sind und sich somit aufheben, wobei die Pleuelstange bei Anordnung eines Kolbens je Zylinder in Drehrichtung geneigt ist und bei Anordnung von zwei Kolben je Zylinder, nämlich bei einer Gegenkolbenmaschine, die Pleuelstange der Auslaßtaumelscheibe (5a) in Drehrichtung geneigt ist und die Neigung der Pleuelstange der Einlaßtaumelscheibe (5b) bei Vorhandensein eines Vorlaufes der Auslaßtaumelscheibe (5a) gegenüber der Einlaßtaumelscheibe (5b) geringer ist als diejenige der Pleuelstange der Auslaßtaumelscheibe (5a), daß das mit der Taumelscheibe (5) verbundene Reaktionsglied als kegelförmiger Abstützring (7) ausgebildet ist, der auf einem am Gehäuse (1) fest angeordneten kegelförmigen Gegenring (8) mit gleichem Umfang abgestützt ist, daß die zusammenwirkenden Flächen von Abstützring (7) und Gegenring (8) ausschließlich durch Reibschluß miteinander in Verbindung stehen und daß eine Positioniereinrichtung (17, 28) für die Taumelscheibe (5) vorgesehen ist.

2. Taumelscheiben-Maschine nach Anspruch 1, **dadurch gekennzeichnet**, daß die Positioniereinrichtung (17) als Magnetkupplung ausgebildet ist.

3. Taumelscheiben-Maschine nach Anspruch 1 oder 2, **dadurch gekennzeichnet**, daß zusätzlich zur Positioniereinrichtung (17) eine Sicherungseinrichtung (21) für die Taumelscheibe (5) vorgesehen ist, die zwei im wesentlichen spielfrei ineinandergreifende Zahnkränze (22, 23) umfaßt, von denen ein Zahnkranz (22) an der Taumelscheibe (5), der andere Zahnkranz (23) am Gehäuse (1) angeordnet ist, wobei zumindest ein Zahnkranz mit begrenztem Spiel (24) in Drehrichtung gehalten ist.

4. Taumelscheiben-Maschine nach Anspruch 1, **dadurch gekennzeichnet**, daß die Positioniereinrichtung (28) zwei Zahnkränze (29, 30) umfaßt, von denen der eine (29) an der Taumelscheibe (5) und der andere (30) am Gehäuse (1) angeordnet ist, daß die beiden Zahnkränze (29, 30) im Berührungsbereich von Abstützing (7) und Gegenring (8) im wesentlichen spielfrei ineinander eingreifen und daß zumindest ein Zahnkranz (30) in Umfangsrichtung drehelastisch gehalten ist.

5. Taumelscheiben-Maschine nach Anspruch 4, **dadurch gekennzeichnet**, daß die elastische Verdrehbarkeit der beiden Zahnkränze (29, 30) auf einen Winkelbetrag beschränkt ist, der geringer als 1° ist.

6. Taumelscheiben-Maschine nach Anspruch 4 oder 5, **dadurch gekennzeichnet**, daß zur drehelastischen Halterung eines der Zahnkränze (30) eine Vielzahl von gleichmäßig verteilter elastischer Stehbolzen (31) dient, die zwischen Zahnkranz (30) und Gehäuse (1) bzw. Taumelscheibe (5) angeordnet sind.

7. Taumelscheiben-Maschine nach einem der Ansprüche 1 bis 6, **dadurch gekennzeichnet**, daß die Berührungsflächen von Abstützring (7) und Gegenring (8) eine Oberflächenschicht mit einem gegenüber Stahlflächen wesentlich erhöhten Reibwert aufweisen.

8. Taumelscheiben-Maschine nach Anspruch 7, **dadurch gekennzeichnet**, daß die Oberflächenschicht mit hohem Reibwert durch ein Beschichtungsverfahren, z.B. Spray-Coating-Verfahren, Plasma-Spray-Beschichtungsverfahren, D-Gun-Verfahren oder durch Borieren erzeugt ist.

9. Taumelscheiben-Maschine nach einem der Ansprüche 1 bis 8, **dadurch gekennzeichnet**, daß zumindest eine der Berührungsflächen von Abstützring (7) und Gegenring (8) Drainagerillen (32) zur Ableitung von auf den Berührungsflächen befindlichem Öl aufweist.

10. Taumelscheiben-Maschine nach einem der Ansprüche 1 bis 9, **dadurch gekennzeichnet**, daß der Abstützring (7) im Bereich des äußeren Umfangs der Taumelscheibe (5) angeordnet ist.

11. Taumelscheiben-Maschine nach einem der Ansprüche 1 bis 10, **dadurch gekennzeichnet**, daß der mit der Taumelscheibe (5) verbundene Teil (19, 29) der Positioniereinrichtung (17, 28) am äußeren Umfang der Taumelscheibe (5) angeordnet ist.
